# EUROPEAN PATENT APPLICATION

(11) **EP 4 444 002 A1**
(43) Date of publication of application: **09.10.2024**
(21) Application number: 21966385.3
(22) Date of filing: 01.12.2021
(51) Int. Cl.: H04W 72/04, H04W 16/26

(54) **RADIO RELAY DEVICE AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); HARADA, Hiroki, Tokyo 100-6150 (JP); NAGATA, Satoshi, Tokyo 100-6150 (JP); SUN, Weiqi, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2021/044168
(87) International publication number: WO 2023/100302

(57) **Abstract**

A wireless relay device includes: a communication unit configured to receive control information from a base station; a relay unit configured to receive a downlink signal from the base station and transmit the downlink signal to a terminal, and receive an uplink signal from the terminal and transmit the uplink signal to the base station; and a control unit configured to apply the control information to a relay operation of the downlink signal and the uplink signal. The control unit obtains a configuration of the downlink signal and the uplink signal in a time domain from the control information and applies the configuration to the relay operation.

## Description

### FIELD OF THE INVENTION

The present invention relates to a wireless relay device and a communication method in a wireless communication system.

### BACKGROUND OF THE INVENTION

In 3GPP (3rd Generation Partnership Project), in order to realize further larger system capacity, further faster data transmission speed, further lower latency in a wireless communication section, etc., a wireless communication method called "5G" or "NR (New Radio)" has been discussed (hereinafter, the wireless communication method is referred to as "NR"). In 5G, various wireless technologies and network architectures are being discussed to satisfy the requirement of a radio link delay of 1 ms or less while achieving throughput of 10 Gbps or more (e.g., non-patent literature 1).

In the next generation communication, the high frequency band is expected to be used. From the viewpoint of the reduced number of scatterers, reduced shadowing effects, increased distance attenuation, or the like, due to the characteristics of the high frequency band, the communication quality is required to be improved. The beam control, environment, and the like, for ensuring the communication quality are expected to be required.

For example, there is a problem of easily created dead zones because of the radio waves' strong tendency of traveling straight in the high frequency band. Accordingly, methods of improving the communication quality under the multi-path environment have been discussed, the methods include using a passive repeater or an active type reflector (RIS: Reconfigurable Intelligent Surface), a smart repeater that receives and amplifies a signal to be re-radiated, and the like (for example, Non-Patent Document 2).

### Citation List

### Non-Patent Document

Non-Patent Document 1: 3GPP TS 38.300 V16.7.0 (2021-09)
Non-Patent Document 2: NTT DOCOMO, "White Paper 5G Evolution and 6G"(2021-02, Version 3.0), Internet<URL:https://www.nttdocomo.co.jp/binary/pdf/corporate/technology/whitepape r_6g/DOCOMO_6G_White_PaperJP_20210203.pdf>
Non-Patent Document 3: 3GPP TS 38.331 V16.6.0 (2021-09)
Non-Patent Document 4: 3GPP TS 38.212 V16.7.0 (2021-09)
Non-Patent Document 5: 3GPP TS 38.213 V16.7.0 (2021-09)

### SUMMARY OF THE INVENTION

### TECHNICAL PROBLEM

Conventionally, the wireless relay device, which reflects, or transparently transmits, a radio wave from the radio wave generation source such as a base station to a destination to receive the radio wave such as a terminal in order to relay the radio wave, used to operate as an RF (Radio Frequency) relay that did not use control information from the base station. On the other hand, a method of performing a wireless relay operation by using control information from the base station has not been established.

The present invention has been made in view of the above points, and it is an object of the present invention to control a relay operation by the wireless relay device, based on the control information from the base station.

### SOLUTION TO PROBLEM

According to the disclosed technique, a wireless relay device is provided. The wireless relay device includes: a communication unit configured to receive control information from a base station; a relay unit configured to receive a downlink signal from the base station and transmit the downlink signal to a terminal, and receive an uplink signal from the terminal and transmit the uplink signal to the base station; and a control unit configured to apply the control information to a relay operation of the downlink signal and the uplink signal. The control unit obtains a configuration of the downlink signal and the uplink signal in a time domain from the control information and applies the configuration to the relay operation.

### ADVANTAGEOUS EFFECTS OF INVENTION

According to the disclosed technique, the wireless relay device can control a relay operation based on the control information from the base station in the wireless communication system.

### BRIEF DESCRIPTION OF THE DRAWINGS

[Fig. 1] is a drawing for describing a wireless communication system in an embodiment of the present invention.
[Fig. 2] is a drawing illustrating an example of a functional configuration of a base station 10 in an embodiment of the present invention.
[Fig. 3] is a drawing illustrating an example of a functional configuration of a terminal 20 in an embodiment of the present invention.
[Fig. 4] is a drawing illustrating an example of a functional configuration of a wireless relay device 30 in an embodiment of the present invention.
[Fig. 5] is a drawing illustrating an operational example of a wireless relay device 30 in an embodiment of the present invention.
[Fig. 6] is a drawing illustrating an example of a communication in the high frequency band.
[Fig. 7] is a drawing illustrating an example of a reflection type wireless relay device 30 in an embodiment of the present invention.
[Fig. 8] is a drawing illustrating an example of a transparent transmission type wireless relay device 30 in an embodiment of the present invention.
[Fig. 9] is a drawing illustrating an example of an IAB node.
[Fig. 10] is an operational example of a wireless relay device in an embodiment of the present invention.
[Fig. 11] is a drawing illustrating an example (1) of a UL-DL configuration.
[Fig. 12] is a drawing illustrating an example (2) of a UL-DL configuration.
[Fig. 13] is a drawing illustrating an example (3) of a UL-DL configuration.
[Fig. 14] is a drawing illustrating an example of a slot format configuration.
[Fig. 15] is a drawing illustrating an example (1) of a timing of applying an indication in an embodiment of the present invention.
[Fig. 16] is a drawing illustrating an example (2) of a timing of applying an indication in an embodiment of the present invention.
[Fig. 17] is a drawing illustrating an example of a hardware structure of the base station 10 or the terminal 20 in an embodiment of the present invention.
[Fig. 18] is a drawing illustrating an example of a structure of a vehicle 2001 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

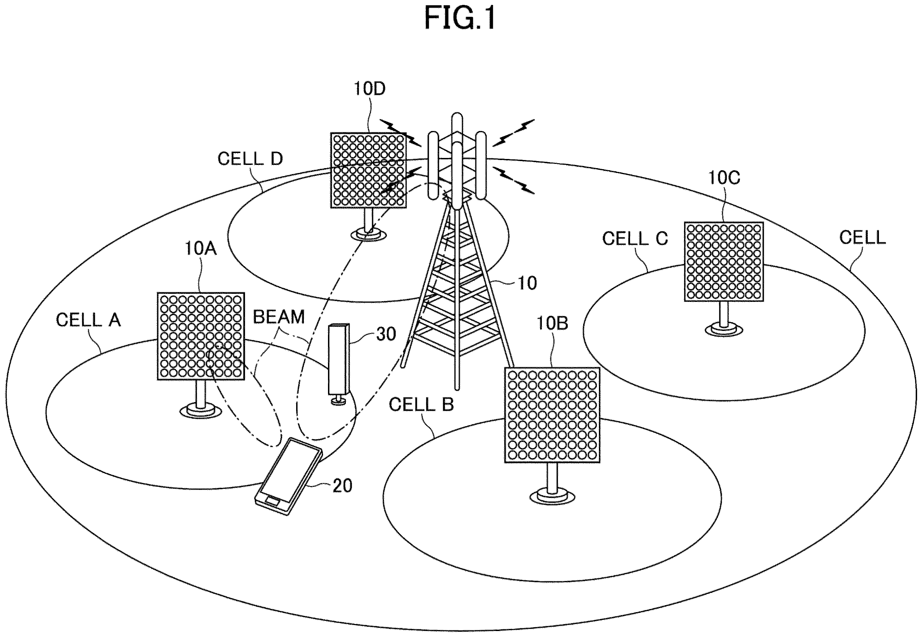

Fig. 1 is a drawing illustrating a wireless communication system according to an embodiment of the present invention. As illustrated in Fig. 1, a wireless communication system according to an embodiment of the present invention includes a base station 10 and a terminal 20. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. In addition, a TTI (Transmission Time Interval) in the time domain may be a slot or a sub-slot, or the TTI may be a subframe.

The base station 10 can perform carrier aggregation to communicate with the terminal 20 by bundling a plurality of cells (multiple CCs (component carriers)). In carrier aggregation, one primary cell (PCell) and one or more secondary cells (SCells) are used.

The base station 10 transmits a synchronization signal, system information, and the like, to the terminal 20. The synchronization signal is, for example, an NR-PSS and an NR-SSS. The system information may be transmitted via a NR-PBCH or a PDSCH, for example, and may be referred to as broadcast information. As shown in Fig. 1, the base station 10 transmits a control signal or data in DL (Downlink) to the terminal 20 and receives a control signal or data in UL (Uplink) from the terminal 20. Note that, here, what is transmitted via a control channel such as PUCCH and PDCCH is called a control signal, and what is transmitted via a shared channel such as PUSCH and PDSCH is called data. These names are mere examples.

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. Note that the terminal 20 may be referred to as a UE, and the base station 10 may be referred to as a gNB.

The terminal 20 can perform carrier aggregation to communicate with the base station 10 by bundling a plurality of cells (a plurality of CCs). In carrier aggregation, one primary cell and one or more secondary cells are used. In addition, PUCCH-SCell having PUCCH may be used.

In addition, in a wireless communication system in an embodiment of the present invention, the base station 10 is a wireless base station deployed in 5G or 6G as an example, and forms a cell. It is to be noted that the cell is a cell of a relatively large size and is referred to as a macro cell.

The base stations 10A to 10D are base stations deployed in 5G or 6G. The base stations 10A to 10D respectively form cells A to D whose size is smaller than the macro cell. The cells A to D may be referred to as small cells, macro cells, or the like. As illustrated in Fig. 1, the cells A to D may be formed to be included in the macro cell.

The macro cell may be generally interpreted as an area with a radius of several hundred meters to tens of kilometers covered by a single base station in which communications are available. In addition, the small cell may be interpreted as a generic name of a cell that covers a smaller area compared with the macro cell.

It is to be noted that the base station 10 and the base stations 10A to 10D may be described as a gNodeB (gNB), BS (Base Station), or the like. In addition, the terminal 20 may be described as a UE, MS, or the like. Furthermore, a specific configuration of a wireless communication system including the numbers and types of base stations and terminals is not limited to an example illustrated in Fig. 1.

In addition, the wireless communication system is not necessarily limited to a wireless communication system according to 5G or 6G. For example, the wireless communication system may be a wireless communication system of the next generation of 6G, or may be a wireless communication system according to LTE.

The base station 10 and the base stations 10A to 10D perform wireless communications according to 5G or 6G with the terminal 20, as an example. The base station 10, the base stations 10A to 10D, and the terminal 20 may support: a massive MIMO in which highly directional beams are generated by controlling a wireless signal transmitted from a plurality of antenna elements; a carrier aggregation (CA) in which a plurality of component carriers (CCs) are bundled to be used; a dual connectivity (DC) in which communications are simultaneously performed between the terminal 20 and each of two NG-RAN nodes; an IAB (Integrated Access and Backhaul) in which the wireless backhaul between wireless communication nodes such as gNBs is integrated with the wireless access to the terminal 20; and the like.

In addition, the wireless communication system may also support the high frequency band that is higher than the following frequency ranges (FRs) that are specified in the 3GPP release 15. For example, a band between 410 MHz to 7.125 GHz may be supported as FR1, and a band between 24.25 GHz to 52.6 GHz may be supported as FR2. Furthermore, the wireless communication system may support a frequency band that is higher than 52.6 GHz up to 114.25 GHz. The frequency band may be referred to as a millimeter wave band.

Here, the base station 10 that supports the massive MIMO can transmit beams. In general, the massive MIMO means a MIMO communication in which an antenna with more than 100 antenna elements is used and enables a wireless communication faster than the conventional wireless communication according to the multiplexing effects of a plurality of streams. In addition, advanced beamforming is also available. The beam width can be dynamically changed in accordance with the used frequency band, the state of the terminal 20, etc. In addition, the increased reception signal power can be achieved according to the beamforming gain obtained by using narrower beams. Furthermore, good effects such as reduced interference generation and effective utilization of wireless resources are expected.

In addition, the wireless communication system may include a wireless relay device 30. In an embodiment of the present invention, as an example, the wireless relay device 30 may be a reflector (RIS), a phase control reflector, a passive repeater, an IRS (Intelligent Reflecting Surface), or the like. As a specific example, the reflector (RIS: Reconfigurable Intelligent Surface) may be what is called a meta-material reflector, a dynamic meta surface, a meta-surface lens, or the like (for example, Non-Patent Document 2).

In an embodiment of the present invention, the wireless relay device 30 relays a wireless signal transmitted from a base station 10A, for example. In the description of an embodiment of the present invention, "relay" may mean at least one of "reflect", "transparently transmit", "aggregate (collect the radio waves approximately to a point)", or "diffract". The terminal 20 can receive a wireless signal relayed by the wireless relay device 30. In addition, the wireless relay device 30 may relay a wireless signal transmitted from the terminal 20 or may relay a wireless signal transmitted from the base station 10.

As an example, the wireless relay device 30 can change the phase of a wireless signal to be relayed to the terminal 20. From the above-described viewpoint, the wireless relay device 30 may be referred to as a phase variable reflector. It is to be noted that, in an embodiment of the present invention, the wireless relay device 30 may be, but is not limited to, a device having a function of changing the phase of a wireless signal to be relayed. In addition, the wireless relay device 30 may be referred to as a repeater, relay device, reflection array, IRS, transmission array, or the like.

In addition, in an embodiment of the present invention, the wireless relay device 30 including an RIS may be referred to as a battery-less device, meta-material function device, intelligent reflecting surface, smart repeater, or the like. As an example, the wireless relay device 30 including the RIS, smart repeater, or the like, may be defined as a device having a function as described in 1) to 5) below.
1) The device may have a function of receiving a signal transmitted from the base station 10. The signal may be a DL signal such as an SSB (SS/PBCH block), PDCCH, PDSCH, DM-RS (Demodulation Reference Signal), PT-RS (Phase Tracking Reference Signal), CSI-RS (Channel Status Information Reference Signal), RIS dedicated signal, or the like. The device may have a function of receiving a signal carrying information related to a meta-material function. It is to be noted that the device may have a function of transmitting the signal to the terminal 20.
2) The device may have a function of transmitting a signal to the base station 10. The signal may be a UL signal such as a PRACH, PUCCH, PUSCH, DM-RS, PT-RS, SRS, RIS dedicated signal, or the like. The device may have a function of transmitting information related to a meta-material function. It is to be noted that the device may have a function of receiving the signal from the terminal 20.
3) The device may have a function of frame synchronization with the base station 10. It is to be noted that the device may have a function of frame synchronization with the terminal 20.
4) The device may have a function of reflecting a signal transmitted from the base station 10 or the terminal 20. For example, the reflecting function may be a function related to the phase change, or a function related to beam control (for example, a function related to control of TCI (Transmission Configuration Indication) - state, or QCL (Quasi Co Location), selection and application of beams, and selection and application of spatial filters/precoding weights).
5) The device may have a function of changing power of a signal transmitted from the base station 10 or the terminal 20. For example, the function of changing power may be power amplification.

In addition, "receive to transmit" or "relay" in the wireless relay device 30 including a RIS, smart repeater, or the like, may mean to perform transmission including the function A described below but not including the function B described below.
Function A: Applying a phase shifter.
Function B: Not including compensation circuit (for example, amplifying, filtering).

As a different example,
Function A: Applying a phase shifter and compensation circuit.
Function B: Not including frequency conversion.

It is to be noted that the amplitude may be amplified when the phase is changed in the wireless relay device 30 such as an RIS, or the like. In addition, "relaying" in the wireless relay device 30 such as an RIS, or the like, may mean transmitting a received signal as it is without performing a process of layer 2 or layer 3 level, may mean transmitting a received signal as it is in the physical layer level, or may mean transmitting a received signal as it is without interpreting the signal (changing the phase or amplifying the amplitude may be performed).

### (Device configuration)

Next, examples of functional configurations of the base station 10, the terminal 20, and the wireless relay device 30 that perform processing and operations in an embodiment of the present invention will be described. The base station 10, the terminal 20, and the wireless relay device 30 include functions of performing embodiments to be described below. With respect to the above, each of the base station 10, the terminal 20, and the wireless relay device 30 may include only one function among the embodiments.

### <Base station 10>

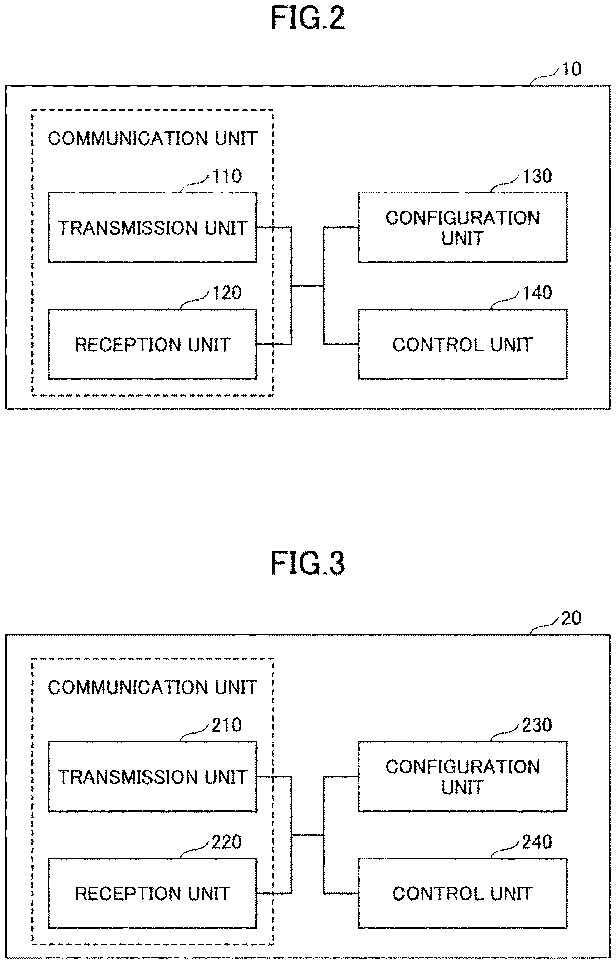

Fig. 2 is a diagram illustrating an example of a functional configuration of the base station 10. As shown in Fig. 2, the base station 10 includes a transmission unit 110, a reception unit 120, a configuration unit 130, and a control unit 140. The functional configuration illustrated in Fig. 2 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiments.

The configuration unit 130 stores preset configuration information and various configuration information items to be transmitted to the terminal 20 in a storage apparatus and reads the preset configuration information from the storage apparatus as necessary. The control unit 140 performs, for example, resource allocation and control of the entire base station 10. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

Fig. 3 is a diagram illustrating an example of a functional configuration of the terminal 20. As shown in Fig. 3, the terminal 20 includes a transmission unit 210, a reception unit 220, a configuration unit 230, and a control unit 240. The functional configuration illustrated in Fig. 3 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in an embodiment of the present invention.

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

### <Wireless relay device 30>

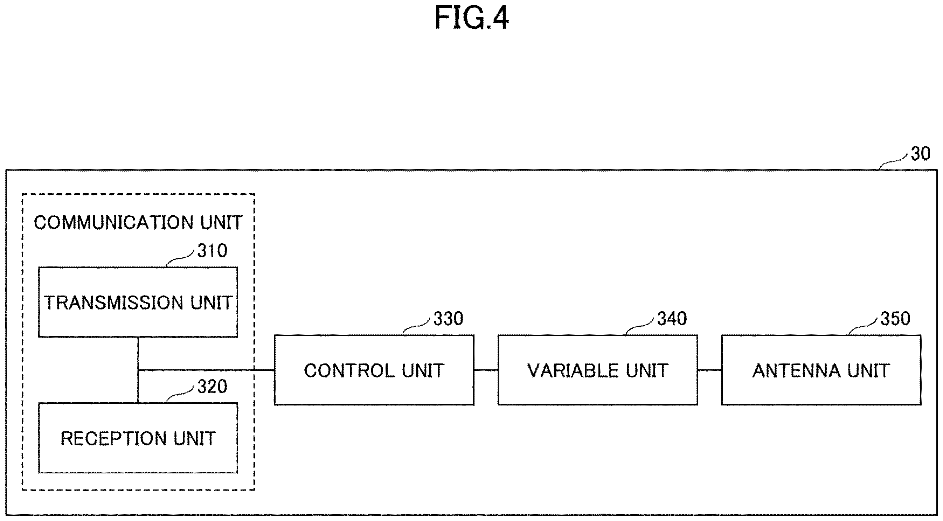

Fig. 4 is a drawing illustrating an example of a functional configuration of a wireless relay device 30 in an embodiment of the present invention. As shown in Fig. 4, the wireless relay device 30 includes a transmission unit 310, a reception unit 320, a control unit 330, a variable unit 340, and an antenna unit 350. Functional divisions and names of functional units may be anything as long as operations according to an embodiment of the present invention can be performed. The transmission unit 310 and the reception unit 320 may be referred to as a communication unit.

The antenna unit 350 includes at least one antenna that is connected to the variable unit 340. For example, the antenna unit 350 may be arranged as an array antenna. In an embodiment of the present invention, the antenna unit 350 may be specifically referred to as a relay antenna. It is to be noted that the variable unit 340 and the antenna unit 350 may be referred to as a relay unit.

The variable unit 340 is connected to the antenna unit 350, and is capable of changing the phase, load, amplitude, or the like. For example, the variable unit 340 may be a variable phase shifter, a phase shifter, an amplifier, or the like. For example, the direction of the radio waves or beams can be changed by changing the phase of the radio waves transmitted from the generation source of the radio waves to the relay antenna.

The control unit 330 is a control means for controlling the variable unit 340. In an embodiment of the present invention, the control unit 330 functions as a control unit for controlling the relaying states at the time when relaying radio waves received from the base station 10 or the terminal 20 without signal interpretation. Here, the control unit 330 may change the relaying state based on the control information received from the base station 10 or the terminal 20 via the communication unit, or may change the relaying state based on the reception state of the radio waves received from the base station 10 or the terminal 20. For example, the control unit 330 may select appropriate (directions of) reception beams and transmission beams and may control the variable unit 340, based on the control information such as an SSB, or the like. Similarly, the control unit 330 may select an appropriate combination of reception direction and transmission direction, according to the reception state, based on the criteria such as the best reception quality or the largest reception power and may control the variable unit 340.

In addition, in an embodiment of the present invention, the control unit 330 can control the variable unit 340, based on, for example, the information related to the propagation path between the terminal 20 or the base station 10A and the antenna unit 350 (hereinafter, including information estimated from the reception state and the control information). For example, the control unit 330 can relay the radio waves received from the base station 10A towards a specific direction of the recipient of the radio waves (in this case, the terminal 20) by using a known method including an active repeater, RIS, or the like, to change the phase without using the transmission power. Specifically, the control unit 330 controls the phase of the wireless signal to be relayed towards the terminal 20 or the base station 10A, based on the estimated propagation path information, H_{PT} and H_{RP}. In other words, according to the same principle as the beamforming, etc., the radio waves can be relayed towards a specific direction by changing the phase of the array antenna, etc. It is to be noted that the wireless relay device 30 only controls (changes) the phase of the wireless signal (radio waves) via the control unit 330, and thus, may perform the relaying without power supply and without performing the power amplification of the wireless signal to be relayed.

In addition, the control unit 330 may obtain the information according to the reception state in an embodiment of the present invention. In addition, the reception unit 320 may obtain control information from the base station 10A or the terminal 20. For example, the reception unit 320 may receive, as the control information, various signals including SSB (including various signals described as an example in the above-described functions) transmitted from the base station 10A or the terminal 20.

In addition, the control unit 330 may estimate the propagation path information (H_{PT} and H_{RP}) between the generation source of the radio waves (for example, the base station 10A or the terminal 20) and the antenna unit 350, based on the reception state (for example, the change of the reception power, or the like) at the time of controlling the variable unit 340.

The propagation path information related to each propagation path (propagation channel information) is specifically information of amplitude or phase and is estimated information with respect to the propagation path of the radio waves arriving at the antenna unit 350 in an embodiment of the present invention. As an example, according to the same principle as the I/Q (In-phase/Quadrature) detection, the control unit 330 may estimate the propagation path information of the antenna unit 350, based on the change of the reception power at the time when the phase of the variable unit 340 of the array-shaped antenna unit 350 is orthogonally switched.

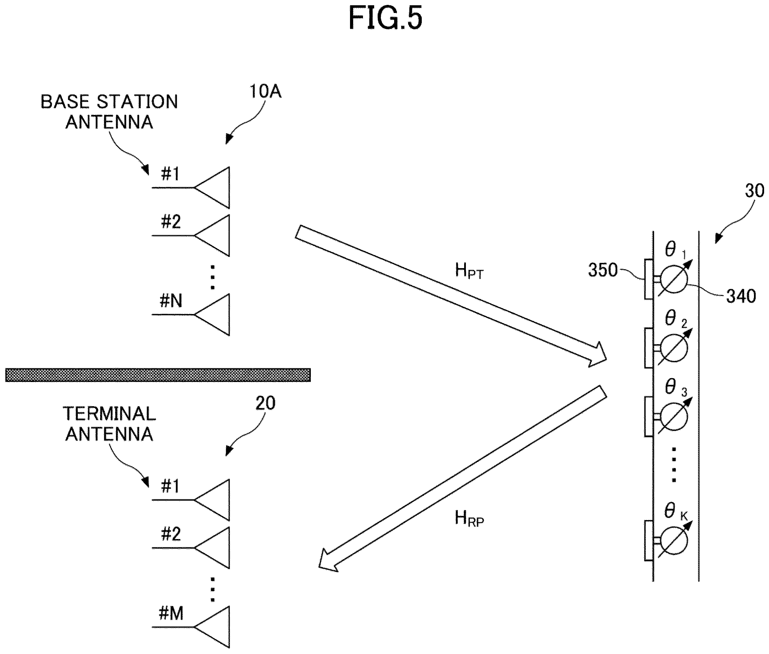

Fig. 5 is an operation example of a wireless relay device 30 in an embodiment of the present invention. As illustrated in Fig. 5, as an example, the wireless relay device 30 is located between the base station 10A (may be another base station 10, or the like) and the terminal 20, and relays (reflects, transparently transmits, collects, diffracts) a wireless signal transmitted and received between the base station 10A and the terminal 20.

As a specific example, in a case where the wireless quality is good, the base station 10A and the terminal 20 directly transmit and receive a wireless signal without involving the wireless relay device 30. On the other hand, in a case where the wireless quality is degraded, for example, where there is an obstruction between the base station 10A and the terminal 20, the wireless relay device 30 relays a wireless signal transmitted and received between the base station 10A and the terminal 20.

Specifically, the wireless relay device 30 estimates the propagation path information, HPT and HRT, between the generation source such as the base station 10A or the terminal 20 and the relay antenna, based on the change of the reception power at the time of controlling the variable unit 340 such as a variable phase shifter. In addition, the wireless relay device 30 relays a wireless signal towards the recipient of the radio waves such as the terminal 20, by controlling the variable unit 340 such as a variable phase shifter, based on the estimated propagation path information. It is to be noted that the wireless relay device 30 may relay a wireless signal towards the recipient of the radio waves such as the base station 10A or the terminal 20 by controlling the variable unit 340 such as a variable phase shifter based on the control information received from the base station 10A or the terminal 20 without limiting the case to a case of estimating the propagation path information, H_{PT} and H_{RT}.

Here, the propagation path or the propagation channel is each of the communication paths of the wireless communication, and is a communication path between each of the transmission antennas and each of reception antennas (for example, base station antennas and terminal antennas in the figure).

As an example, the wireless relay device 30 includes: an antenna unit 350 including a small multi-element antenna corresponding to the massive MIMO; and a variable unit 340 including a variable phase shifter or a phase shifter that changes the phase of a wireless signal, which is substantially the radio waves, to a specific phase, and controls the phase of the radio waves to be relayed towards the terminal 20 or the base station 10A by using the variable unit 340.

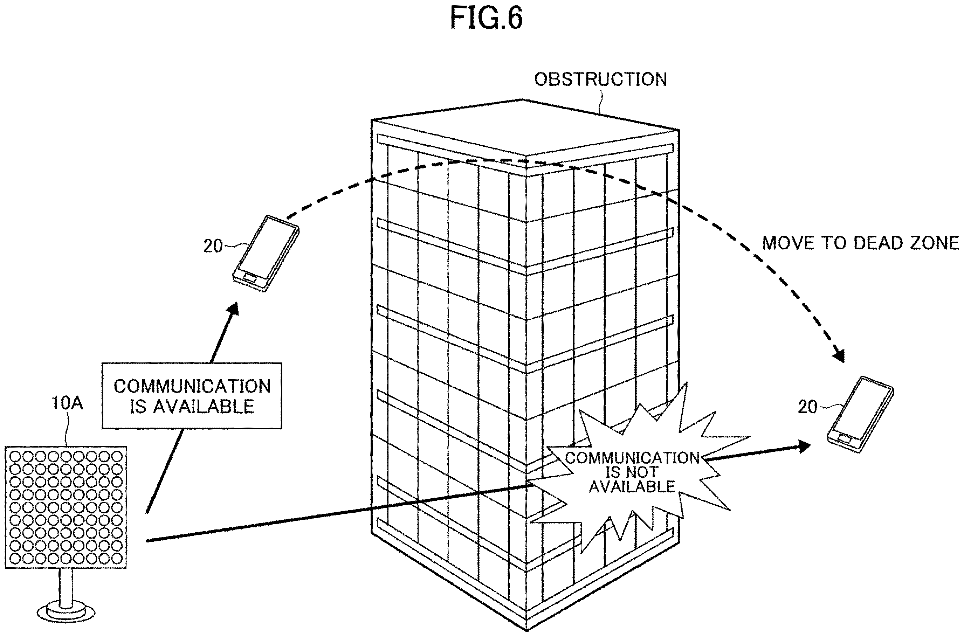

Fig. 6 is a drawing illustrating an example of a communication in the high frequency band. As illustrated in Fig. 6, in a case of using the high frequency band that is equal to or higher than several GHz to several dozens GHz, dead zones are easily created because of the radio waves' strong tendency of traveling straight. If the line of sight between the base station 10A and the terminal 20 is not blocked, the wireless communication between the base station 10A and the terminal 20 is not affected even in a case where the high frequency band is used. On the other hand, for example, if the line of sight between the base station 10A and the terminal 20 is blocked by an obstruction such as a building or a tree, the wireless quality is significantly degraded. In other words, when the terminal 20 moves to a dead zone in which the line of sight is blocked by an obstruction, the communication can be interrupted.

Considering the fact that there is an application that utilizes high data rate/high capacity and low latency characteristics, it is important to resolve the dead zones to ensure the connection between the base station and the terminal without a communication interruption within the wireless communication system.

Accordingly, technologies of the radio wave propagation control device such as an RIS or smart repeater that can relay the radio waves between the base station 10A and the terminal 20 are being developed. In this way, communication characteristics can be improved by controlling the propagation characteristics of the base station signals, and thus, the coverage enhancement without using a signal source and the reduction of the installation and deployment cost due to the addition of base stations can be achieved.

Conventionally, there are a passive type and an active type in the radio wave propagation control device. The passive type has an advantage of not requiring control information, but is not capable of following the mobile body, environment change, or the like. On the other hand, the active type has a disadvantage of increased overhead requiring the control information, but has an advantage of being capable of variably controlling the propagation characteristics of the radio waves by changing the load (phase) state of the control antennas and capable of following the mobile body, environment change, etc.

There are two types including a feedback (FB) type and a propagation path information type in the active type radio wave propagation control device and control method. In the FB type, the variable type radio wave propagation control device searches for an optimal condition by having the feedback of the communication state when the load (phase) state is randomly changed performed by the terminal 20, etc. On the other hand, in the propagation path information type, the optimal radio wave propagation control can be performed by determining the load state based on the propagation path information between the base station and the radio wave propagation control device. In an embodiment of the present invention, either type can be applied.

In addition, with respect to the relay method, there are types including reflection, transparent transmission, diffraction, collection, etc. In an embodiment of the present invention, as an example, configuration examples of a reflection type and a transparent transmission type will be described below (refer to Non-Patent Document 2 with respect to the diffraction type and the collection type).

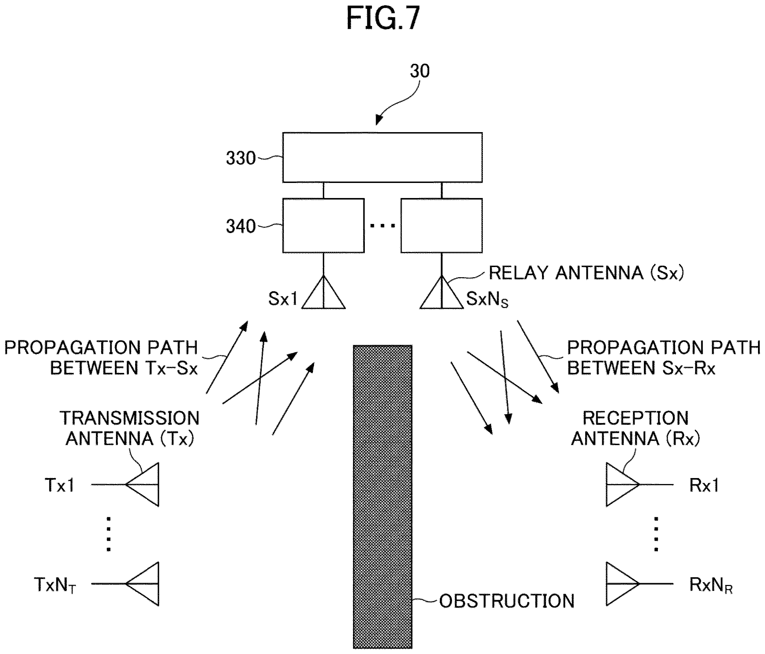

Fig. 7 is a drawing illustrating an example of a reflection type wireless relay device 30 in an embodiment of the present invention. Fig. 7 will be used for describing an example of a system structure of a reflection type wireless relay device 30. Fig. 7 is a drawing illustrating relationships among the transmission antenna Tx of the base station 10A or the like, the relay antenna Sx of the transparent transmission type wireless relay device 30, and the reception antenna Rx of the terminal 20 or the like. As illustrated in Fig. 7, in an embodiment of the present invention, MIMO is used as an example, there are multiple propagation paths between Tx and Sx and multiple propagation paths between Sx and Rx, and the wireless relay device 30 relays the radio waves by controlling the variable unit 340 that includes a variable phase shifter of the relay antenna Sx, or the like.

As illustrated in Fig. 7, in a case of the reflection type, the array-shaped relay antenna is arranged in a manner in which antennas face the same direction. According to the above, propagation paths of the relay antenna can be estimated based on the reception states that are observed when multiple phase conditions of the relay antenna are changed.

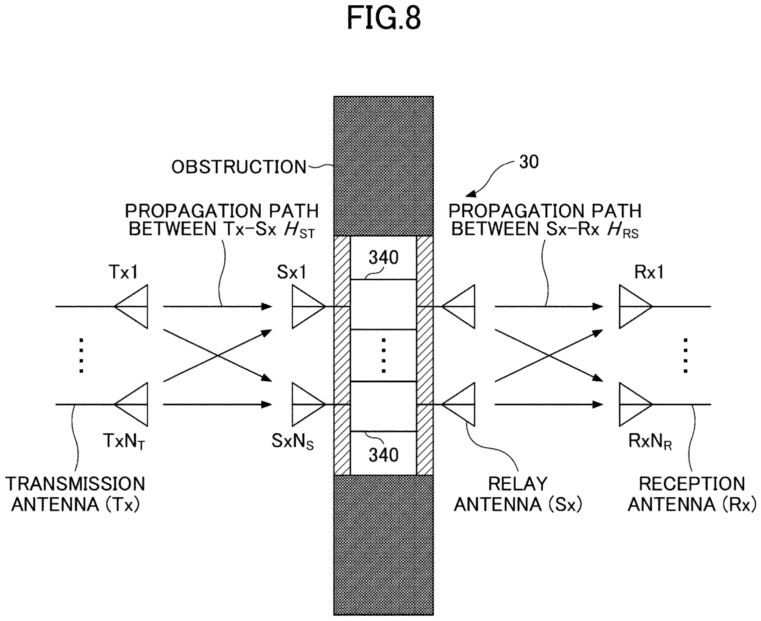

Fig. 8 is a drawing illustrating an example of a transparent transmission type wireless relay device 30 in an embodiment of the present invention. Fig. 8 will be used for describing an example of a system structure of a transparent transmission type wireless relay device 30. Fig. 8 is a drawing illustrating relationships among the transmission antenna Tx of the base station 10A or the like, the relay antenna Sx of the transparent transmission type wireless relay device 30, and the reception antenna Rx of the terminal 20 or the like. As illustrated in Fig. 8, in an embodiment of the present invention, MIMO is used as an example, there are multiple propagation paths between Tx and Sx and multiple propagation paths between Sx and Rx, and the wireless relay device 30 relays the radio waves received from one side to the other side via the variable unit 340 of the relay antenna Sx such as a variable phase shifter as illustrated in the figure. As described above, in a case of the transparent transmission type, reference antennas on the left side of the figure and relay antennas on the right side of the figure are arranged as pairs respectively facing the opposite directions in a manner in which the radio waves received from one side can be relayed to the other side. Regardless of the transparent transmission type or the reflection type, the reception state may be measured by detecting the power arrived at the relay antennas by using the power detection device, or the like. In addition, propagation paths of the relay antennas can be estimated based on the reception signals that are observed when multiple phase conditions of the relay antennas are changed.

A repeater that relays a wireless signal in the NR system (hereinafter, referred to as "NR repeater") is an RF (Radio Frequency) repeater, and is a non-regenerative type of relay node. The NR repeater amplifies and forwards a signal between a gNB and a UE. The RF repeater supports a full-duplex communication and simultaneously performs reception from the gNB and transmission to the UE, or simultaneously performs reception from the UE and transmission to the gNB.

The NR repeater is required to satisfy RF and EMC (Electromagnetic Compatibility) requirements. In addition, the NR repeater is required to support FDD and TDD in the FR1 band and TDD in the FR2 band. In addition, the NR repeater is not required to perform adaptive beamforming towards the UE. In addition, in a case of TDD, the NR repeater is required to satisfy the BS and UE emission requirements in all slots and is required to satisfy the more stringent absolute value of dBm. In addition, in TDD, the NR repeater is required not to exceed EIRP (Equivalent isotropically radiated power), TRP (Total Radiated Power), and transmission power that are specified for the UE power class defined in the target band.

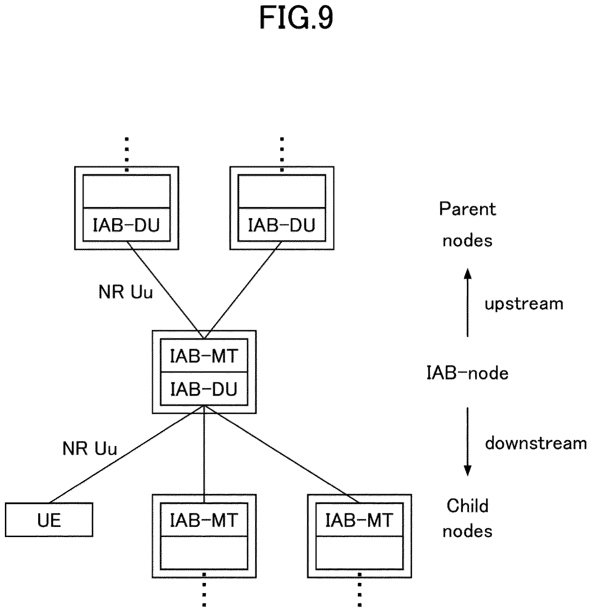

Fig. 9 is a drawing illustrating an example of an IAB node. The IAB (Integrated Access and Backhaul) is a regenerative type of relay node. The IAB node includes a DU (Distributed Unit) function and an MT (Mobile Terminal) function. As illustrated in Fig. 9, the DU function provides an access to the UE and to the next hop of IAB node. The MT function provides a connection to the parent node in a similar manner as the UE. The connection from the IAB node to a parent node may be referred to as an upstream, and the connection from the IAB node to a child node may be referred to as a downstream. The interface between IAB-DU and IAB-MT and the interface between IAB-DU and UE may be defined by the NR-Uu interface.

The IAB that is specified in 3GPP release 16 supports a half-duplex communication, and transmission and reception of the MT function and transmission and reception of the DU function are performed by TDM. The IAB that is specified in 3GPP release 17 supports a full-duplex communication, and transmission and reception of the MT function and transmission and reception of the DU function are performed simultaneously.

The drawback of the RF repeater is that the RF repeater amplifies not only a signal but also noise, which may cause the interference to increase in the system. In order to improve performance of the repeater, the smart repeater is being discussed in 3GPP release 18. It is to be noted that the smart repeater may be a device that has a signal relay function and that receives a control signal related to the relay function from the base station 10, and may be referred to as a different name.

For example, the smart repeater may be an RF repeater (non-regenerative type of relay node) and may amplify and forward a signal between the gNB and the UE. In addition, the smart repeater may support a full-duplex communication. The smart repeater can simultaneously perform reception from the gNB and transmission to the UE, or can simultaneously perform reception from the UE and transmission to the gNB. It is to be noted that the amplification of a signal may be replaced with the change of a signal power.

The scenario that is discussed for the NR repeater of 3GPP release 17 may be applied to the smart repeater of 3GPP release 18. For example, TDD and FDD may be supported in FR1, and TDD may be supported in FR2.

In addition, the following 1) to 3) may be discussed for the smart repeater of 3GPP release 18.
1) DL/UL control by the smart repeater. With respect to the DL control, the smart repeater receives a DL signal from the gNB and amplifies the DL signal to be forwarded or transmitted to the UE. With respect to the UL control, the smart repeater receives a UL signal from the UE and amplifies the UL signal to be forwarded or transmitted to the gNB. The smart repeater can apply parameters independently to DL or UL by recognizing the DL or UL. The parameters may be parameters related to the beam, power, bandwidth, and the like.
2) ON/OFF of the smart repeater. The interference in the system can be reduced by causing the smart repeater to relay a signal only when needed.
3) Control related to the beamforming between the gNB and the smart repeater, and between the UE and the smart repeater. According to the above-described control, the interference to another node can be reduced.

It is to be noted that the smart repeater may include the functions described in 1) to 2) below.
1) MT (Mobile Terminal) function or UE function. Similar to the legacy UE, connection to the gNB can be performed and a control signal can be received from the gNB.
2) RF function. As described above, the smart repeater receives a DL signal from the gNB, and amplifies the DL signal to be forwarded or transmitted to the UE. In addition, the smart repeater receives a UL signal from the UE, and amplifies the UL signal to be forwarded or transmitted to the gNB.

Table 1 illustrates characteristics of the NR repeater, NR-IAB, and smart repeater.

**[Table 1]**

| | Type of Relay | Function | Duplex mode | Control information from gNB |
|---|---|---|---|---|
| NR repeater | RF relay non-regenerative type (amplify and forward) | RF | Full duplex | No |
| NR IAB | Layer 2 relay, regenerative type | MT | Half duplex | Yes |
| | | - Connect to gNB in similar way as legacy UE | | |
| | | | Full duplex | |
| | | DU | | |
| | | - Provide access to UE and next hop IAB | | |
| | | - PHY/MAC/RLC function (e.g., scheduling, routing, etc.) | | |
| Smart repeater | RF relay, non-regenerative type (amplify and forward) | MT | Full duplex | Yes |
| | | - Connect to gNB in similar way as legacy UE | | |
| | | RF | | |

As illustrated in Table 1, the NR repeater is a non-regenerative type of RF relay, and supports an RF function and a full-duplex communication. The NR-IAB is a regenerative type of layer 2 relay, and supports the MT function for connecting to the gNB that is similar to the legacy UE, the DU function that provides a function of an access to the UE and of serving as the next hop IAB and a function of PHY/MAC/BAP (Backhaul adaptation protocol)/RLC (Radio link control), a half-duplex or full-duplex communication, and a function of obtaining control information from the gNB. The NR-IAB is a regenerative type of layer 2 relay, and supports the MT function for connecting to the gNB that is similar to the legacy UE, the RF function, the full-duplex communication, and a function of obtaining control information from the gNB.

The following capability related to the smart repeater or the MT function of the smart repeater may be defined. The MT function of the smart repeater may mean a function of performing a communication with the base station 10 in order to receive a control signal related to the relay function.

For example, the capability indicating whether or not the smart repeater supports a function of receiving the information described in 1) to 4) below from the gNB may be defined. In addition, the capability indicating whether or not the smart repeater supports a function of semi-statically or dynamically obtaining the information described in 1) to 4) from the gNB may be defined.
1) DL or UL.
2) ON or OFF. In addition, the capability of supporting the ON/OFF control and the switching time required for ON/OFF may be reported as capabilities.
3) Beams. In addition, the capability of supporting the beam control and the number of supported beams may be reported as capabilities.
4) Power. In addition, the supported power control, power range, granularity of power control, granularity of power adjustment may be reported as capabilities.

The above-described capabilities may be defined as independent capabilities, or may be defined as a group including a plurality of capabilities. Each of the above-described capabilities of the smart repeater may be a mandatory capability or an optional capability. A plurality of types of the smart repeater may be defined. For example, different types of the smart repeater may support different capabilities described above. One of the above-described capabilities may be a mandatory capability and another capability may be an optional capability.

Each of the above-described capabilities may be reported for each of the smart repeaters, may be reported for each MT function of the smart repeaters, may be reported for each FR, or may be reported for each band.

In addition to the above-described capabilities, the conventional UE capability framework may be applied to the MT function of the smart repeater. On the other hand, a capability that is required for the legacy UE is not required to be required as the MT function of the smart repeater. In addition, a mandatory capability for the legacy UE may be an optional capability for the smart repeater. With respect to the MT function of the smart repeater, the candidate value, value range, or parameter may be different from that of the legacy UE, the default vale, value range, or parameter may be different from that of the legacy UE, or the mandatory value, value range, or parameter may be different from that of the legacy UE. The legacy UE may mean a terminal 20.

In a case where the above-described capabilities are supported, the gNB may configure or indicate control information to the smart repeater, the control information being related to DL/UL, ON/OFF, beams, power, or the like. The control information may be received by using the MT function or the UE function of the smart repeater via RRC signaling, MAC-CE, and/or DCI.

In a case where a configuration or an indication of control information related to DL/UL, ON/OFF, beams, power, or the like, for a slot/symbol is received, the smart repeater may apply the control information to the RF function of the smart repeater for the slot/symbol. It is to be noted that a "slot/symbol" indicates a slot and/or symbol. In addition, the RF function may mean the relay function.

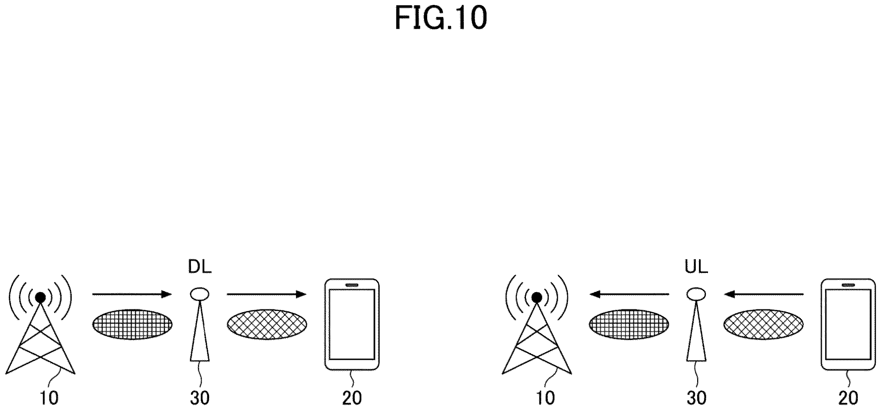

Fig. 10 is an operational example of a wireless relay device in an embodiment of the present invention. As illustrated in Fig. 10, in a case where a slot/symbol is configured or indicated to the smart repeater to be DL, the smart repeater may receive a DL signal from the gNB, and may amplify the DL signal to be transferred or transmitted to the UE by using the slot/symbol. For example, the DL may be applied to both the MT function of the smart repeater and the RF function of the smart repeater. In addition, the smart repeater may apply the beam, power, and other parameters to the corresponding DL slot/symbol.

As illustrated in Fig. 10, in a case where a slot/symbol is configured or indicated to the smart repeater to be UL, the smart repeater may receive a UL signal from the UE, and may amplify the UL signal to be transferred or transmitted to the gNB by using the slot/symbol. For example, the UL may be applied to both the MT function of the smart repeater and the RF function of the smart repeater. In addition, the smart repeater may apply the beam, power, and other parameters to the corresponding UL slot/symbol.

Regarding the ON/OFF control, in a case where a configuration or an indication indicating that a slot/symbol is ON to the smart repeater, the smart repeater may transfer a DL signal from the gNB to the UE or may transfer a UL signal from the UE to the gNB by using the slot/symbol. For example, the above-described state may be referred to as a state in which the RF function of the smart repeater is ON.

Regarding the ON/OFF control, in a case where a configuration or an indication indicating that a slot/symbol is OFF to the smart repeater, the smart repeater is not required to transfer a DL signal from the gNB to the UE or is not required to transfer a UL signal from the UE to the gNB by using the slot/symbol. For example, the above-described state may be referred to as a state in which the RF function of the smart repeater is OFF. It is to be noted that the MT function of the smart repeater may be performed independently from the RF function of the smart repeater. In other words, a control of whether or not to perform the MT function of the smart repeater may be performed independently from the ON/OFF control of the RF function of the smart repeater.

Regarding the beam control, the beams may be configured or indicated by the RS, TCI state, DL-TCI, UL-TCI, DL and UL joint TCI, QCL, SRI (SRS resource indicator), spatial relation, spatial domain filter, or the like, (including other words representing the beams). The above-described control may be referred to as the beam control for the RF function of the smart repeater.

Hereinafter, the DL/UL control information that is applied to the RF function of the smart repeater will be mainly described.

### [Option 1]

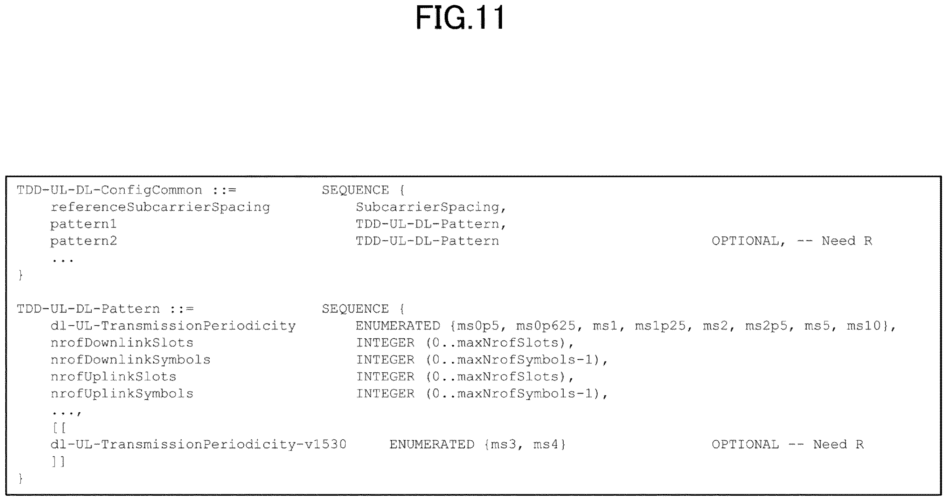

Fig. 11 is a drawing illustrating an example (1) of a UL-DL configuration. In a case where the DL/UL control information for the RF function of the smart repeater is transmitted from the gNB to the smart repeater, the conventional information element TDD-UL-DL-ConfigCommon illustrated in Fig. 11 may be used (refer to non-patent document 3). In a case where a slot/symbol is configured to be a DL, UL, or flexible symbol (hereinafter, referred to as "F") by TDD-UL-DL-ConfigCommon, the smart repeater may assume that the slot/symbol is DL, UL, or F.

The period of the DL/UL control information, the number of DL slots (N_DL), the number of DL symbols (n_DL), the number of UL slots (N_UL), and the number of UL symbols (n_UL) may be indicated from the gNB to the smart repeater. For example, the first N_DL slots in a period may be DL slots. The n_DL symbols after the N_DL slots may be DL symbols. The last N_UL slots in the period may be UL slots. The n_UL symbols before the N_UL slots may be UL symbols. The remaining slots/symbols in the period may be flexible symbols.

It is to be noted that the flexible slot/symbol may indicate a slot/symbol that is to become a DL or UL slot/symbol when indicated by another signaling.

In addition, for example, the first N_UL slots in a period may be UL slots. The n_UL symbols after the N_UL slots may be UL symbols. The last N_DL slots in the period may be DL slots. The n_DL symbols before the N_DL slots may be DL symbols. The remaining slots/symbols in the period may be flexible symbols.

For example, flexible symbols are not required to be configured. Only the number of DL slots and/or the number of DL symbols in a period may be configured or indicated, and the remaining slots/symbols in the period may be UL slots and/or UL symbols. Alternatively, only the number of UL slots and/or the number of UL symbols in a period may be configured or indicated, and the remaining slots/symbols in the period may be DL slots and/or DL symbols.

It is to be noted that a new signaling including a configuration and information that are similar to those of TDD-UL-DL-ConfigCommon may be defined. A slot/symbol may be configured to be DL, UL, or F and the configuration may be indicated from the gNB to the smart repeater according to the new signaling. For example, the new signaling may be broadcast for all of the smart repeaters in the cell.

### [Option 2]

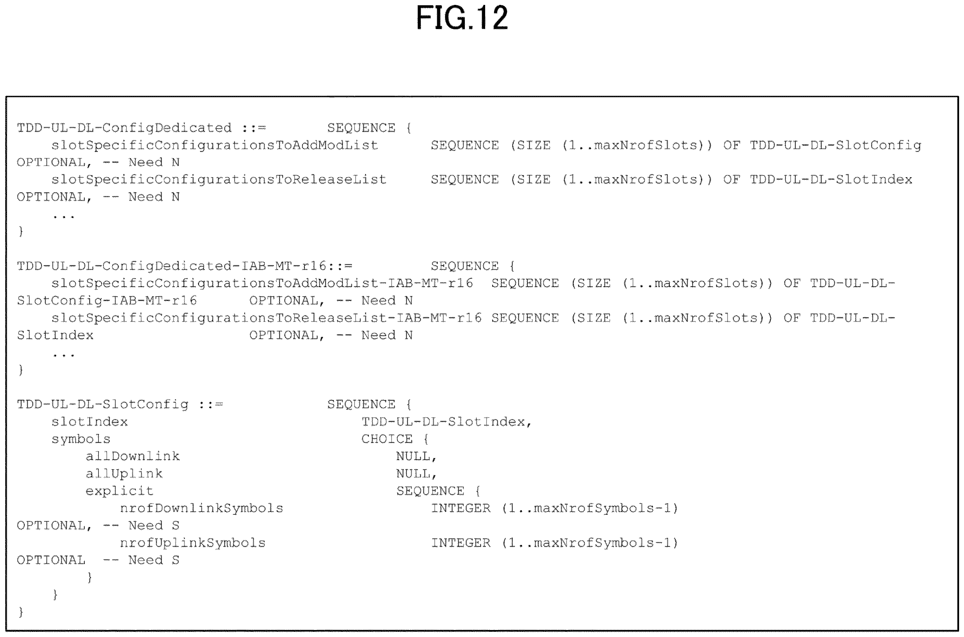

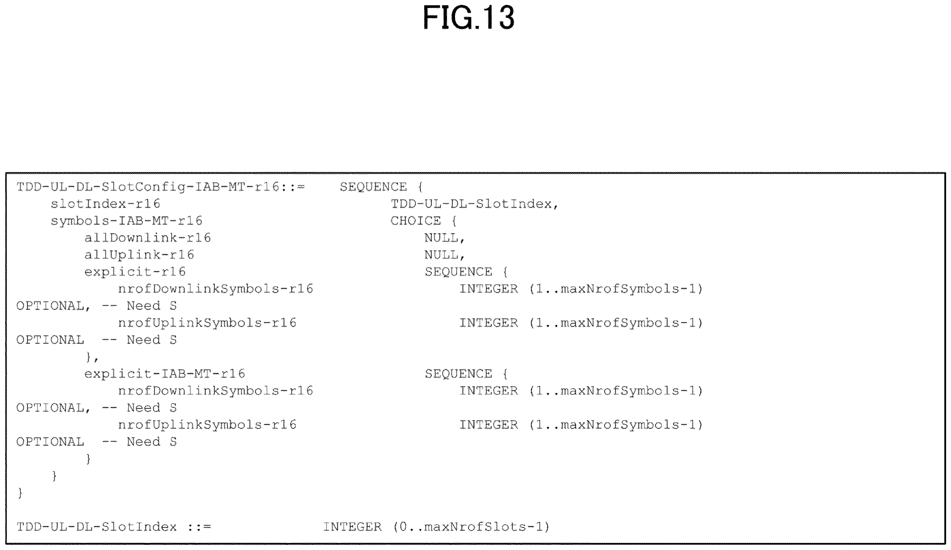

Fig. 12 is a drawing illustrating an example (2) of a UL-DL configuration. Fig. 13 is a drawing illustrating an example (3) of a UL-DL configuration. In a case where the DL/UL control information for the RF function of the smart repeater is transmitted from the gNB to the smart repeater, the conventional information element TDD-UL-DL-ConfigDedicated or the conventional information element TDD-UL-DL-ConfigDedicated-IAB-MT-r16 illustrated in Fig. 12 or in Fig. 13 may be used (refer to non-patent document 3).

In a case where a slot/symbol is configured to be DL, UL, or F according to TDD-UL-DL-ConfigDedicated or TDD-UL-DL-ConfigDedicated-IAB-MT-r16, the smart repeater may assume that the slot/symbol is DL, UL, or F.

The DL/UL pattern in each slot may be indicated. A slot index, information indicating that the slot is a DL slot or UL slot, the number of DL symbols (n_DL) in the slot, and the number of UL symbols (n_UL) in the slot may be indicated. In a case where an indication indicates that the slot is a DL slot, the slot may be DL. In a case where an indication indicates that the slot is a UL slot, the slot may be UL. In a case where the number of DL symbols and the number of UL symbols are indicated, the first n_DL symbols in the slot may be DL symbols, and the last n_UL symbols in the slot may be UL symbols. The remaining symbols in the slot may be flexible. Alternatively, the first n_UL symbols in the slot may be UL symbols, and the last n_DL symbols in the slot may be DL symbols. The remaining symbols in the slot may be flexible. The pattern indicating whether the first symbols are to be DL or UL may be indicated.

For example, flexible symbols are not required to be configured. Only the number of DL slots and/or the number of DL symbols in a period may be configured or indicated, and the remaining slots/symbols in the period may be UL slots and/or UL symbols. Alternatively, Only the number of UL slots and/or the number of UL symbols in a period may be configured or indicated, and the remaining slots/symbols in the period may be DL slots and/or DL symbols.

It is to be noted that a new signaling including a configuration and information that are similar to those of TDD-UL-DL-ConfigDedicated or TDD-UL-DL-ConfigDedicated-IAB-MT-r16 may be defined. A slot/symbol may be configured to be DL, UL, or F and the configuration may be indicated from the gNB to the smart repeater according to the new signaling. For example, the new signaling may be a parameter related to the UL-DL configuration that is indicated for each smart repeater.

### [Option 3]

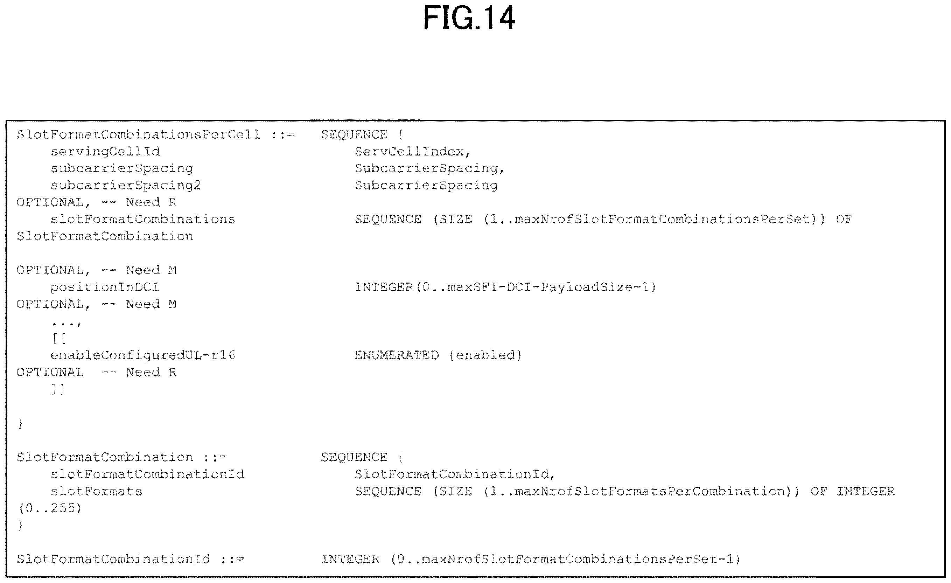

Fig. 14 is a drawing illustrating an example of a slot format configuration. The conventional DCI format 2_0 may be used for the slot format indication (refer to non-patent document 4). In a case where a slot/symbol is configured to be DL, UL, or F according to DCI format 2_0, the smart repeater may assume that the slot/symbol is DL, UL, or F.

In each serving cell, a plurality of SlotFormatConbinations illustrated in Fig. 14 may be configured by RRC signaling (refer to non-patent document 3). Each SlotFormatConbination may include a slot format for a plurality of slots.

A slot format may be indicated as an index in the slot format table (refer to non-patent document 5) for each slot. For example, a new slot format table may be defined.

It is to be noted that flexible symbols are not required to be present. The new slot format table may include a slot format including only DL or UL symbols, or an index in the conventional slot format table indicating a slot format including only DL or UL symbols may be indicated.

Each SlotFormatConbination may be associated with SlotFormatConbinationID. SlotFormatConbinationID may be indicated by DCI in each serving cell. For each serving cell, the position in DCI may be configured.

A new signaling including a configuration and information that are similar to those of DCI format 2_0 may be defined. A slot/symbol may be configured to be DL, UL, or F and the configuration may be indicated from the gNB to the smart repeater according to the new signaling. For example, the new signaling may be a DCI format that is transmitted to a plurality of, or all of, the smart repeaters in the cell.

For example, one of the slot format indicator 1, slot format indicator 2, slot format indicator 3, ..., or slot format indicator N may be indicated by DCI format 2_0. The index may correspond to the slot format table of Table 1.1.1-1 or Table 14.2 in the non-patent document 5.

### [Option 4]

In a case where the DL/UL control information for the RF function of the smart repeater is transmitted from the gNB to the smart repeater, the DCI format used for PUSCH or PDSCH scheduling may be used. For example, DCI format 0_0, 0_1, 0_2, 1_1, and 1_2 may be used. The DCI may be scrambled by C-RNTI of the MT function of the smart repeater, or may be scrambled by a specific RNTI used for detecting the DCI. CORESET for detecting the DCI may be configured by the legacy search space set, or may be determined by using the conventional CORESET configuration procedure. The CORESET may be identified via information elements SearchSpace and ControlReseouceSet in RRC signaling. In addition, an individual search space set and CORESET may be configured for the DCI.

When DCI format 1_X is received (when PDSCH is scheduled for a normal UE), the smart repeater may assume that the slot/symbol indicated by the time domain resource allocation field of the DCI is DL. The DCI format 1_X may be replaced with a PDSCH scheduling DCI. It is to be noted that X may be replaced with any value, and may be 0, 1, or 2, for example.

When DCI format 0_X is received (when PUSCH is scheduled for a normal UE), the smart repeater may assume that the slot/symbol indicated by the time domain resource allocation field of the DCI is UL. The DCI format 0_X may be replaced with a PUSCH scheduling DCI. It is to be noted that X may be replaced with any value, and may be 0, 1, or 2, for example.

In a case where DCI format 1_X is received and one or more fields included in the DCI are predefined values, the smart repeater may only transfer a DL signal from the gNB to the UE by using a slot/symbol that is indicated by the time domain resource allocation field of the DCI, and the MT function of the smart repeater is not required to receive or process PDSCH in a resource indicated by the DCI.

For example, when DCI format 1_X is received, the fields described in the following 1) to 4) may be used in the same way as in the 3GPP release 16 or 17.
1) Identifier of the DCI format (indication of DL/UL)
2) Time domain resource allocation field (indication of a slot/symbol to be operated as DL)
3) TPC (required for a case of supporting TPC)
4) TCI (required for a case of being used for beam indication)

Other fields of the DCI may be used for indicating whether or not PDSCH in a resource indicated by the DCI that is configured to a predefined value is required to be received or processed by the MT function of the smart repeater. In addition, other unused fields of the DCI may be reserved.

In a case where DCI format 0_X is received and one or more fields included in the DCI are predefined values, the smart repeater may only transfer a UL signal from the gNB to the UE by using a slot/symbol that is indicated by the time domain resource allocation field of the DCI, and the MT function of the smart repeater is not required to receive or process PUSCH in a resource indicated by the DCI.

For example, when DCI format 0_X is received, the fields described in the following 1) to 4) may be used in the same way as in the 3GPP release 16 or 17.
1) Identifier of the DCI format (indication of DL/UL)
2) Time domain resource allocation field (indication of a slot/symbol to be operated as UL)
3) TPC (required for a case of supporting TPC)
4) TCI (required for a case of being used for beam indication)

Other fields of the DCI may be used for indicating whether or not PUSCH in a resource indicated by the DCI that is configured to a predefined value is required to be received or processed by the MT function of the smart repeater. In addition, other unused fields of the DCI may be reserved.

A new DCI format including fields that are similar to those of DCI format 1_X or 0_X may be defined. A slot/symbol may be configured to be DL, UL, or F and the configuration may be indicated from the gNB to the smart repeater according to the new DCI format. The new DCI format may include at least a DCI format identifier for indicating DL/UL and a time domain resource allocation field for indicating a slot/symbol used for DL/UL. For example, the new DCI format may include a field for indicating a predetermined resource (for example, a time domain resource), and may be transmitted for each smart repeater.

### [Option 5]

In a case where the gNB transmits DL/UL control information for the RF function of the smart repeater to the smart repeater, the SPS (Semi persistent scheduling) configuration or activation may be used for the DL indication and the CG (Configured grant) configuration or activation may be used for the UL indication. In other words, the DL/UL configuration may be indicated to the smart repeater by using the mechanism of the SPS configuration or activation and the CG configuration or activation.

The smart repeater may assume that a slot/symbol, which is configured by a periodic SPS configuration and is indicated by the SPS activation DCI (time domain resource allocation field), is to be DL. The smart repeater may assume that a slot/symbol, which is configured by a periodic CG configuration (periodicity, type 1 CG time domain offset, and type 1 CG time domain position according to ConfiguredGrantConfig) and is indicated by the CG activation DCI (time domain resource allocation field), is to be UL.

The above-described SPS configuration and activation and the above-described CG configuration and activation are used for the sake of DL or UL indication, and are not intended to mean that the smart repeater transmits CG or receives SPS as a normal UE. In addition, the smart repeater does not perform HARQ feedback corresponding to the SPS reception.

When the SPS configuration and activation is used for the DL indication, in a case where one or more fields included in the SPS configuration or SPS activation DCI are pre-defined values, the smart repeater may only transfer a DL signal from the gNB to the UE by using a slot/symbol indicated by the time domain resource allocation field of the DCI and the MT function of the smart repeater is not required to receive or process PDSCH in the configured or indicated resource.

When the CG configuration and activation is used for the UL indication, in a case where one or more fields included in the CG configuration or CG activation DCI are pre-defined values, the smart repeater may only transfer a UL signal from the gNB to the UE by using a slot/symbol indicated by the time domain resource allocation field of the DCI and the MT function of the smart repeater is not required to receive or process PUSCH in the configured or indicated resource.

A new RRC configuration and activation DCI including fields that are similar to those of the SPS configuration and activation or the CG configuration and activation may be defined. A slot/symbol may be configured to be DL or UL and the configuration may be indicated from the gNB to the smart repeater according to the new DCI format. The new signaling may include at least a pattern period or the time domain resource allocation field that indicates a slot/symbol used for DL/UL. It is to be noted that "period" may be replaced with "periodicity". For example, periodic time resources may be determined to be DL or UL, based on the pattern period and the time domain resource allocation field.

When DL/UL control information for the RF function of the smart repeater is transmitted from the gNB to the smart repeater as described above, in a case where a plurality of DL/UL configurations that are different from each other are indicated with respect to a same symbol, that is, in a case where an indication of DL is received and an indication of UL is received with respect to a same symbol, the smart repeater may perform an operation as described in the following 1) to 3).
1) The collision processing rule for the slot format of the legacy UE may be applied.
2) A rule may be predefined in which an option/signaling A for indicating the DL/UL configuration has a priority higher than that of an option/signaling B for indicating another DL/UL configuration. For example, a rule may be predefined in which the dynamic signaling by DCI has a priority higher than that of the semi-static or upper layer signaling by RRC.
3) The smart repeater is not required to assume that a plurality of DL/UL configurations that are different from each other are configured or indicated with respect to a same symbol according to a plurality of options/signalings.

### [Option 6]

In a case where the MT function of the smart repeater determines the slot format, different signaling or mechanism may be used. For example, in a case where the MT function of the smart repeater is configured or indicated to receive PDCCH, PDSCH, CSI-RS, DL-PRS, or SSB by using a slot/symbol, the smart repeater may assume that the slot/symbol is DL.

For example, in a case where the MT function of the smart repeater is configured or indicated to transmit PUCCH, PUSCH, PRACH, or SRS by using a slot/symbol, the smart repeater may assume that the slot/symbol is UL.

### [Option 7]

In a case where DL/UL control information for the RF function of the smart repeater is transmitted from the gNB to the smart repeater, new signaling including a configuration that is similar to the DUF configuration in the gNB-DU cell resource configuration may be defined.

The period of the DL/UL configuration may be indicated by the new signaling. The formats as described in the following 1) and 2) may be indicated for each slot in the period.
1) The format may be explicitly indicated. Information indicating which of the DL-F-UL pattern or the UL-F-DL pattern is applied to the slot may be indicated, the number of DL symbols (n_DL) may be indicated, or the number of UL symbols (n_UL) may be indicated. It is to be noted that the DL-F-UL pattern means that the first n_DL symbols are DL, the last n_UL symbols are UL, and the remaining symbols are flexible symbols. It is to be noted that the UL-F-DL pattern means that the first n_UL symbols are UL, the last n_DL symbols are DL, and the remaining symbols are flexible symbols. It is to be noted that the flexible symbols are not required to be configured. The number of DL symbols alone may be indicated, and the remaining symbols may be UL symbols. The number of UL symbols alone may be indicated, and the remaining symbols may be DL symbols. It is to be noted that the DL-F-UL pattern alone may be supported, or the UL-F-DL pattern alone may be supported.
2) The format may be implicitly indicated. An index in the slot format table in Table 11.1.1-1 or Table 14.2 in the non-patent document 5 may be indicated. Table 11.1.1-1 alone may be supported, or a new slot format table may be defined. It is to be noted that the flexible symbols are not required to be configured. A slot format in which only DL/UL symbols are specified may be included in the new slot format table, or a slot format in which only DL/UL symbols are specified according to the legacy slot format table may be indicated.

Only the format of the above-described 1) may be supported, or only the format of the above-described 2) may be supported. It is to be noted that, with respect to each slot, whether the slot is DL or UL may be indicated. In a case where the slot is DL or UL, the smart repeater may assume that all symbols in the slot are DL or UL.

### [Option 8]

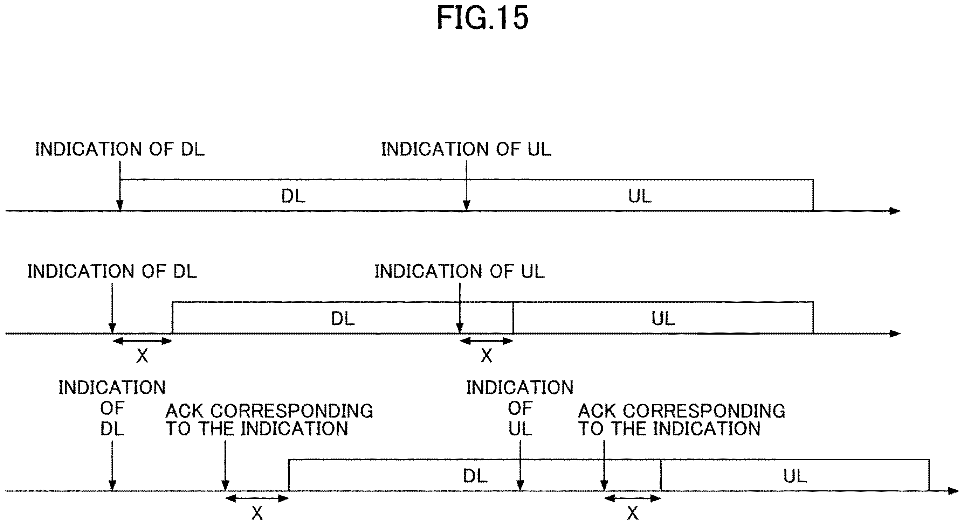

Fig. 15 is a drawing illustrating an example (1) of a timing of applying an indication in an embodiment of the present invention. Information indicating DL or UL may be indicated by RRC, MAC-CE, or DCI. The smart repeater may apply the received indication until the smart repeater receives a new indication.

As illustrated in Fig. 15, the smart repeater may apply the indication at the timing of the indication reception.

As illustrated in Fig. 15, the smart repeater may apply an indication at the timing of X ms, X subframes, X slots, or X symbols after the timing at which the indication has been received.

As illustrated in Fig. 15, the smart repeater may apply the indication at the timing of X ms, X subframes, X slots, or X symbols after the timing at which an ACK corresponding to the indication has been transmitted.

In a case where information indicating DL or UL is indicated by the conventional DCI and where the indication is applied at the timing of X after the indication, the time between the DCI and the PDSCH (DL) or PUSCH (UL) to be indicated may be limited. For example, the smart repeater may assume that PDSCH (DL) or PUSCH (UL) is to be indicated at the timing of X slots or X symbols after the timing of DCI reception.

### [Option 9]

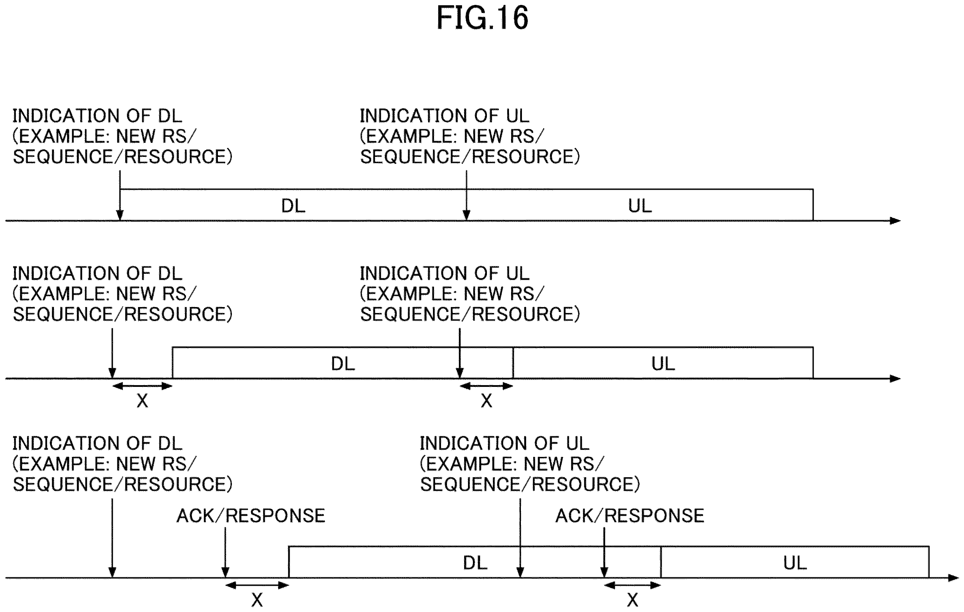

Fig. 16 is a drawing illustrating an example (2) of a timing of applying an indication in an embodiment of the present invention. Information indicating DL or UL may be indicated by a new RS, sequence, and/or resource. The association between the information indicating DL or UL and the RS, sequence, and/or resource may be predefined, or may be configured by semi-static signaling such as RRC signaling. The smart repeater may apply the corresponding DL or UL when the RS, sequence, and/or resource is received.

As illustrated in Fig. 16, the smart repeater may apply the indication at the timing of X ms, X subframes, X slots, or X symbols after the timing at which the RS, sequence, and/or resource has been received.

As illustrated in Fig. 16, the smart repeater may apply the indication at the timing of X ms, X subframes, X slots, or X symbols after the timing at which an ACK corresponding to the indication by the RS, sequence, and/or resource has been transmitted.

It is to be noted that, with respect to the above-described option 1 to option 9, one or more options may be simultaneously configured or supported. It is to be noted that, the MT function of the smart repeater is not required to support all of the functions of the legacy UE. The MT function of the smart repeater may support only the minimum set of the MT function that is required for receiving and/or decoding the control information from the gNB (control information related to DL/UL, ON/OFF, power, beam, or the like).

According to the above-described embodiment, the smart repeater can improve communication quality by obtaining control information to be applied to the RF function from the gNB and applying the control information to a signal relay operation between the gNB and the UE.

In other words, the wireless relay device can control a relay operation based on the control information from the base station in the wireless communication system.

### (Hardware structure)

In the above block diagrams used for describing an embodiment of the present invention (Fig. 2, Fig. 3 and Fig. 4), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. In either case, as described above, the implementation method is not particularly limited.

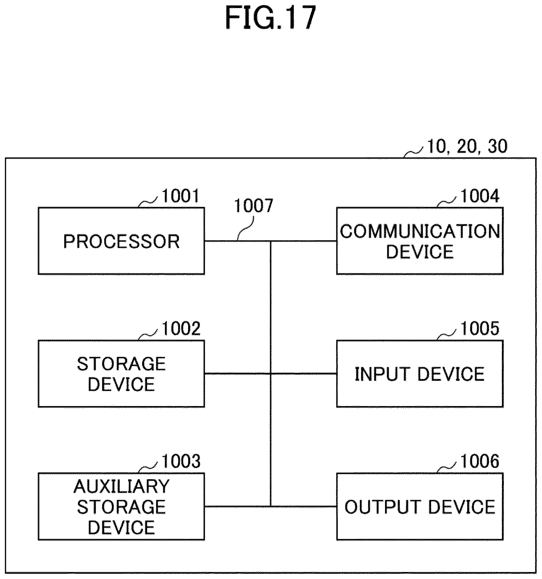

For example, the base station 10, the terminal 20, and the wireless relay device 30, etc., according to an embodiment of the present invention may function as a computer for processing the wireless communication method of the present disclosure. Fig. 17 is a drawing illustrating an example of hardware structures of the base station 10, the terminal 20 and the wireless relay device 30 according to an embodiment of the present invention. Each of the above-described base station 10, the terminal 20, and the wireless relay device 30 may be a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10, the terminal 20 and the wireless relay device 30 may include one or more of each of the devices illustrated in the figure, or may be configured without including some of the devices.

Each function in the base station 10, the terminal 20 and the wireless relay device 30 is implemented by having the processor 1001 perform an operation by reading predetermined software (programs) onto hardware such as the processor 1001 and the storage device 1002, and by controlling communication by the communication device 1004 and controlling at least one of reading or writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 2 may be realized by control programs that are stored in the storage device 1002 and are executed by the processor 1001. Further, for example, the control unit 240 of the terminal 20 illustrated in Fig. 3 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may include a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10, the terminal 20 and the wireless relay device 30 may include hardware such as a microprocessor, a digital signal processor (DSP), an ASIC (Application Specific Integrated Circuit), a PLD (Programmable Logic Device), an FPGA (Field Programmable Gate Array), etc., and a part or all of each functional block may be implemented by the hardware. For example, the processor 1001 may be implemented by at least one of the above hardware elements.

In addition, the wireless relay device 30 may include a variable phase shifter, phase shifter, amplifier, antenna, antenna array, or the like, as the hardware included in the variable unit 340 and the antenna unit 350 depending on the necessity.

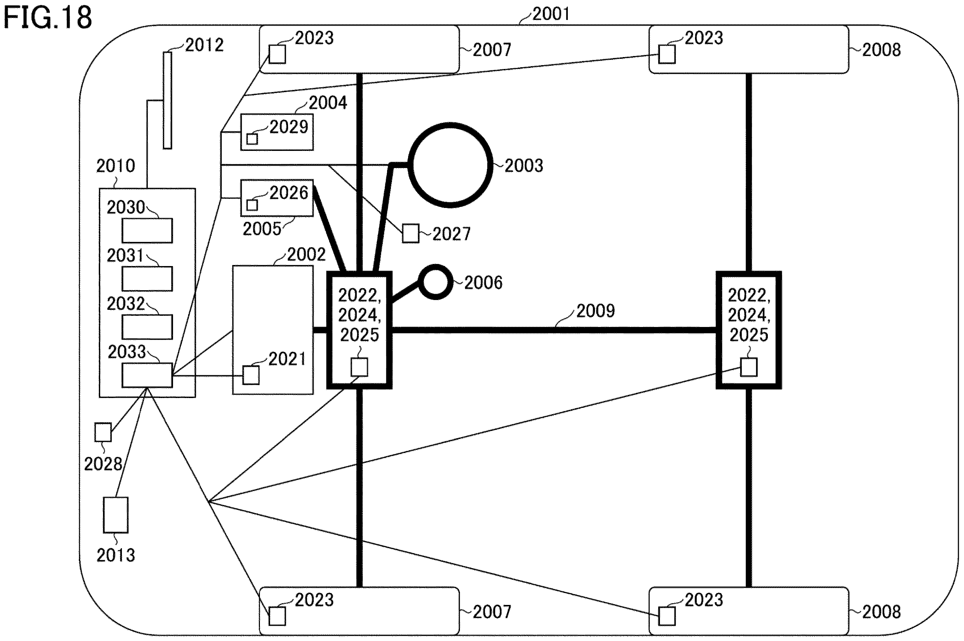

Fig. 18 shows an example of a configuration of a vehicle 2001. As shown in Fig. 18, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a wireless relay device is provided. The wireless relay device includes: a communication unit configured to receive control information from a base station; a relay unit configured to receive a downlink signal from the base station and transmit the downlink signal to a terminal, and receive an uplink signal from the terminal and transmit the uplink signal to the base station; and a control unit configured to apply the control information to a relay operation of the downlink signal and the uplink signal. The control unit obtains a configuration of the downlink signal and the uplink signal in a time domain from the control information and applies the configuration to the relay operation.

According to the above-described configuration, the smart repeater can improve communication quality by obtaining control information to be applied to the RF function from the gNB and applying the control information to a signal relay operation between the gNB and the UE. In other words, the wireless relay device can control a relay operation based on the control information from the base station in the wireless communication system.

In a case where the configuration indicates that the downlink signal is to be transmitted in a first period, the relay unit may receive the downlink signal from the base station and transmit the downlink signal to the terminal in the first period, and, in a case where the configuration indicates that the uplink signal is to be transmitted in a second period, the relay unit may receive the uplink signal from the terminal and transmit the uplink signal to the base station in the second period. According to the above-described configuration, the smart repeater can improve communication quality by obtaining control information to be applied to the RF function from the gNB and applying the control information to a signal relay operation between the gNB and the UE.

The control unit may obtain a time domain configuration related to the downlink signal alone from the configuration and assume that a period in which the downlink signal is to be not transmitted is a period in which the uplink signal is to be transmitted. According to the above-described configuration, the smart repeater can improve communication quality by obtaining control information to be applied to the RF function from the gNB and applying the control information to a signal relay operation between the gNB and the UE.

The control unit may assume that a period in which the communication unit receives a signal from the base station is a period in which the downlink signal is to be relayed, and may assume that a period in which the communication unit transmits a signal to the base station is a period in which the uplink signal is to be relayed. According to the above-described configuration, the smart repeater can improve communication quality by obtaining control information to be applied to the RF function from the gNB and applying the control information to a signal relay operation between the gNB and the UE.

The relay unit may assume that a period in which the downlink signal is to be relayed or a period in which the uplink signal is to be relayed starts after an elapse of a predetermined period from a timing at which the communication unit has received the control information. According to the above-described configuration, the smart repeater can improve communication quality by obtaining control information to be applied to the RF function from the gNB and applying the control information to a signal relay operation between the gNB and the UE.

In addition, according to an embodiment of the present invention, a communication method performed by a wireless relay device is provided. The communication method includes: receiving control information from a base station; receiving a downlink signal from the base station and transmitting the downlink signal to a terminal, and receiving an uplink signal from the terminal and transmitting the uplink signal to the base station; applying the control information to a relay operation of the downlink signal and the uplink signal; obtaining a configuration of the downlink signal and the uplink signal in a time domain from the control information; and applying the configuration to the relay operation.

According to the above-described configuration, the smart repeater can improve communication quality by obtaining control information to be applied to the RF function from the gNB and applying the control information to a signal relay operation between the gNB and the UE. In other words, the wireless relay device can control a relay operation based on the control information from the base station in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, subcarrier spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

It is to be noted that, in the present disclosure, the variable unit 340 and the antenna unit 350 are examples of a relay unit.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Wireless relay device
310 Transmission unit
320 Reception unit
330 Control unit
340 Variable unit
350 Antenna unit
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A wireless relay device comprising:
a communication unit configured to receive control information from a base station;
a relay unit configured to receive a downlink signal from the base station and transmit the downlink signal to a terminal, and receive an uplink signal from the terminal and transmit the uplink signal to the base station; and
a control unit configured to apply the control information to a relay operation of the downlink signal and the uplink signal, wherein
the control unit obtains a configuration of the downlink signal and the uplink signal in a time domain from the control information and applies the configuration to the relay operation.

2. The wireless relay device as claimed in claim 1, wherein
in a case where the configuration indicates that the downlink signal is to be transmitted in a first period, the relay unit receives the downlink signal from the base station and transmits the downlink signal to the terminal in the first period, and, in a case where the configuration indicates that the uplink signal is to be transmitted in a second period, the relay unit receives the uplink signal from the terminal and transmits the uplink signal to the base station in the second period.

3. The wireless relay device as claimed in claim 2, wherein
the control unit obtains a time domain configuration related to the downlink signal alone from the configuration and assumes that a period in which the downlink signal is to be not transmitted is a period in which the uplink signal is to be transmitted.

4. The wireless relay device as claimed in claim 2, wherein
the control unit assumes that a period in which the communication unit receives a signal from the base station is a period in which the downlink signal is to be relayed, and assumes that a period in which the communication unit transmits a signal to the base station is a period in which the uplink signal is to be relayed.

5. The wireless relay device as claimed in claim 2, wherein
the relay unit assumes that a period in which the downlink signal is to be relayed or a period in which the uplink signal is to be relayed starts after an elapse of a predetermined period from a timing at which the communication unit has received the control information.

6. A communication method performed by a wireless relay device, the communication method comprising:
receiving control information from a base station;
receiving a downlink signal from the base station and transmitting the downlink signal to a terminal, and receiving an uplink signal from the terminal and transmitting the uplink signal to the base station;
applying the control information to a relay operation of the downlink signal and the uplink signal; and
obtaining a configuration of the downlink signal and the uplink signal in a time domain from the control information and applying the configuration to the relay operation.
